# EUROPEAN PATENT SPECIFICATION

(11) **EP 3 043 435 B1**
(45) Date of publication and mention of the grant of the patent: **08.05.2019**
(21) Application number: 14842335.3
(22) Date of filing: 05.09.2014
(51) Int. Cl.: H02G 11/00, B60R 16/02, B60R 16/027

(54) **POWER-SUPPLY STRUCTURE FOR SLIDING STRUCTURE**
STROMVERSORGUNGSSTRUKTUR FÜR EINE GLEITSTRUKTUR
STRUCTURE D'ALIMENTATION ÉLECTRIQUE POUR STRUCTURE À GLISSIÈRE

(30) Priority: 06.09.2013 JP 2013184981; 28.08.2014 JP 2014174428
(43) Date of publication of application: 13.07.2016
(73) Proprietor: Yazaki Corporation, Minato-ku Tokyo 108-8333 (JP)
(72) Inventor: KOGURE, Naoto, Susono-shi Shizuoka 410-1194 (JP)
(74) Representative: Grünecker Patent- und Rechtsanwälte PartG mbB
(86) International application number: PCT/JP2014/073535
(87) International publication number: WO 2015/034063

(56) References cited:
- WO-A1-2013/094550
- WO-A1-2014/013965
- WO-A1-2014/013966
- JP-A- 2008 178 208
- JP-A- 2012 101 584
- JP-A- 2013 162 716
- US-B2- 8 237 053

## Description

### Technical Field

The present invention relates to a power feeding structure for a sliding structure such as a sliding door of an automobile which swings as the sliding structure moves for constantly feeding power to the sliding structure.

### Background Art

To constantly feed power from a vehicle body (i.e., power supply side) to a sliding door (i.e., load side) of an automobile, various power feeding structures for a sliding structure have conventionally been proposed.

JP 2007-151377 A (Figs. 1 and 2) describes a power feeding device for a sliding structure, wherein a fixing member having a substantially U-shaped vertical cross section is fixed to the sliding door (i.e., sliding structure) of an automobile, wherein the fixing member is provided with a swinging member such that the swinging member can turn (swing) in the horizontal direction, wherein a wire harness is passed, in a substantially L-shape, into the swinging member from an upper harness insertion hole and is routed horizontally from a harness insertion hole on front side of the swinging member to a harness fixing tool on the side of a vehicle body (i.e., fixing structure).

A wire harness portion from the sliding door to the upper harness insertion hole of the fixing member is configured by bundling a plurality of electric wires by a tape and such. A wire harness portion from the harness insertion hole on the front side of the fixing member to the vehicle body-side harness fixing tool is configured by covering a plurality of electric wires with a corrugated tube made of synthetic resin.

JP 2007-151377 A (Figs. 1 and 2) also describes, as another embodiment (not shown), the fixing member as a slider which is slidably engaged with a horizontal rail in a case, and the slider is provided with the above-mentioned swinging member.

### Citation List

### Patent Literature

JP 2008-178208 A comprises prior art closest to the invention and discloses a power feeding structure, comprising a fixing structure and a sliding structure, a swinging member and a wire harness, wherein the wire harness is routed from the swinging member to a harness supporting member at the fixing structure; wherein the singing member includes a harness holding portion arranged in a lateral direction and holds one end of the wire harness, a turning shaft or a turning bearing arranged in a vertical direction comprising a harness pulling-out hole, and a fixing member having upper and lower walls provided with the bearings which turnably engage with the shaft, and a back wall connecting the upper and lower walls and fixed to the sliding structure. JP 2008-178208 A also discloses a corresponding power feeding tool for a sliding structure.

### Summary of Invention

### Technical Problem

However, the above-mentioned conventional power feeding structure for a sliding structure has the following problem. That is, when the corrugated tube which is an external part of the wire harness located between the sliding door and the vehicle body (i.e., in a connecting portion) has high rigidity, for example, a pressing load (pressing force) in an axial direction (longitudinal direction) of the wire harness is applied to a shaft of the swinging member. Thus, during opening/closing of the sliding door, the shaft of the swinging member and each bearing of the fixing member engaged with each of the shafts are rubbed against each other in a circumferential direction, causing great friction resistance. As a result, there is possibility that the opening/closing operability of the sliding door is deteriorated.

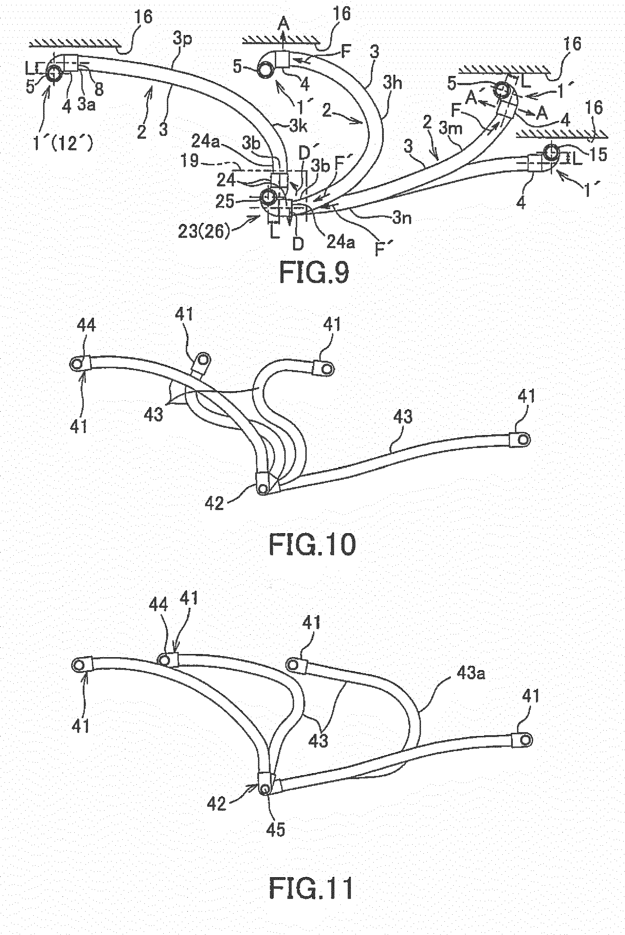

This is explained more specifically with reference to Figs. 10 and 11, which show another embodiment of a power feeding structure for a sliding structure. In the normal operation of the power feeding structure shown in Fig. 10, a wire harness 43 extends in a curved form from a sliding door-side swinging member 41 to a vehicle body-side swinging member 42 when the sliding door is fully opened as shown on the left side in Fig. 10. Then, when the sliding door is half-opened, the wire harness 43 is bent substantially in an S-shape between the two swinging members 41 and 42 as shown in the two drawings at middle of Fig. 10. Then, when the sliding door is fully closed, the wire harness 43 extends substantially linearly between the two swinging members 41 and 42, as shown on the right side in Fig. 10. The sliding door-side swinging member 41 is smoothly inverted in a front-back direction of the vehicle around a shaft 44 as the sliding door is opened or closed in the front-back direction of the vehicle.

In contrast, Fig. 11 shows when the sliding door-side swinging member 41 is turned abnormally. As shown in the left and middle drawings in Fig. 11, from the fully-opened state of the sliding door to the half-opened state or near fully-closed state of the sliding door, the sliding door-side swinging member 41 is not inverted in the front-back direction around the shaft 44 and faced to substantially front side of the vehicle, due to the friction force between the shaft 44 of the swinging member 41 and the bearing of the fixing member (not shown) . Thus, in the half-opened state (or near fully-opened state) of the sliding door, the wire harness 43 is not bent in the substantially S-shape, but is bent in the substantially U-shape as shown in the second drawing from the right in Fig. 11.

Thus, from the near fully-closed state of the sliding door to the fully-closed state of the sliding door shown in the right side drawing of Fig. 11, the swinging member 41 and the wire harness 43 are abruptly inverted in the front-back direction thereby causing a large bending stress. As a result, there are problems that, large force is required for closing the sliding door, and the bending durability of the wire harness 43 may be deteriorated. Furthermore, there is problem that, a substantially U-shaped bent portion 43a of the wire harness 41 is projected into a vehicle body-side opening for getting in and out, causing a passenger to interfere with the projected bent portion 43a during getting in or out, and/or lowering the visual quality.

Not only the sliding door-side swinging member 41, but also the vehicle body-side swinging member 42 have the same problem. That is, the increase in friction resistance between a shaft 45 of the vehicle body-side swinging member 42 and the bearing of the fixing member (not shown) causes the vehicle body-side swinging member to turn abnormally, hindering a smooth bending action of the wire harness 43 shown in Fig. 10.

The similar problems may also arise when the swinging members 41 and 42 are provided with bearings instead of the shaft 44, and the fixing member (not shown) is provided with the shaft 44 instead of the bearing. Furthermore, not only in the sliding door of an automobile, the similar problems may also arise in a sliding door of a vehicle other than the automobile and a sliding door of a device other than the vehicle. Herein, these sliding doors are collectively called sliding structures, and the vehicle bodies and the like are collectively called fixing structures.

In view of the above-mentioned problems, an object of the present invention is to provide a power feeding structure for a sliding structure, which is capable of smoothly turning a sliding structure-side swinging member even when a pressing load in an axial direction of a wire harness is applied during opening and closing operations of the sliding structure, which is capable of preventing wear of a shaft of the swinging member or a bearing, and which can provide a smooth opening/closing operability of the sliding structure and improve the durability of the wire harness.

### Solution to Problem

To achieve the above-mentioned object, a first aspect of the present invention provides a power feeding structure for a sliding structure, wherein a wire harness is routed from a swinging member at a sliding structure side to a harness supporting member at a fixing structure side, wherein the swinging member includes a harness holding portion arranged in a lateral direction and holds one end of the wire harness, and a turning shaft or a turning bearing arranged in a vertical direction which is offset from the harness holding portion in a radial direction of the harness holding portion, wherein, when the sliding structure is fully opened, the shaft or the bearing is located closer to one of the sliding structure and the fixing structure than the harness holding portion, and, when the sliding structure is fully closed, the harness holding portion is located closer to said one of the sliding structure and the fixing structure than the shaft or the bearing.

According to this configuration, when the sliding structure is opened or closed, a compression force in the axial direction is applied to the wire harness. Thus, by the compression reaction force, a pressing force acting toward the fixing structure or the sliding structure around the shaft or the bearing is applied to the harness holding portion of the sliding structure-side swinging member. Utilizing this pressing force, the sliding structure-side swinging member smoothly turns, preventing the increase in wear and friction resistance of the shaft of the swinging member or the bearing, and allowing the sliding structure to smoothly open and close and allowing the wire harness to smoothly bend.

A second aspect provides a power feeding structure for a sliding structure, wherein a wire harness is routed from a swinging member at a sliding structure side to a harness supporting member at a fixing structure side, wherein the swinging member includes a harness holding portion arranged in a lateral direction and holds one end of the wire harness, and a turning shaft or a turning bearing arranged in a vertical direction which is offset from the harness holding portion in a radial direction of the harness holding portion, wherein, when the sliding structure is fully opened, the shaft or the bearing is located closer to the sliding structure than the harness holding portion, and, when the sliding structure is fully closed, the harness holding portion is located closer to the sliding structure than the shaft or the bearing.

According to this configuration, when the sliding structure is closed from its fully opened state, for example, a compression force in the axial direction is applied to the wire harness. Thus, by the compression reaction force, a pressing force in an opening direction of the sliding structure (rearward, when sliding structure is opened rearward) around the shaft or the bearing is applied to the harness holding portion of the sliding structure-side swinging member, allowing the swinging member to smoothly turn the harness holding portion in a direction separating from the sliding structure. As a result, when the sliding structure is half-opened, the wire harness is motivated (guided) to smoothly bend substantially in an S-shape between the swinging member and the harness supporting member.

A third aspect provides a power feeding structure for a sliding structure, wherein a wire harness is routed from a swinging member at a sliding structure side to a harness supporting member at a fixing structure side, wherein the swinging member includes a harness holding portion arranged in a lateral direction and holds one end of the wire harness, and a turning shaft or a turning bearing arranged in a vertical direction which is offset from the harness holding portion in a radial direction of the harness holding portion, wherein, when the sliding structure is fully opened, the shaft or the bearing is located closer to the fixing structure than the harness holding portion, and, when the sliding structure is fully closed, the harness holding portion is located closer to the fixing structure than the shaft or the bearing.

According to this configuration, when the sliding structure is closed from its fully opened state, for example, a compression force in the axial direction is applied to the wire harness. Thus, by the compression reaction force, a pressing force in the opening direction of the sliding structure (rearward, when sliding structure is opened rearward) around the shaft or the bearing is applied to the harness holding portion of the swinging member at the sliding structure side. Thus, the harness holding portion is maintained in a state where it approaches the sliding structure. As a result, when the sliding structure is half-opened, the wire harness is motivated (guided) to smoothly bend substantially in a semi-circular form between the swinging member and the harness supporting member.

A fourth aspect provides the power feeding structure for a sliding structure according to any one of the first to third aspects, wherein the harness supporting member at the fixing structure side is a swinging member, wherein the swinging member at the fixing structure side includes a harness holding portion which is arranged in the lateral direction and which holds the other end of the wire harness, and a turning shaft or a turning bearing arranged in the vertical direction which is offset from the harness holding portion in the radial direction of the harness holding portion, wherein, between when the sliding structure is fully opened and when the sliding structure is fully closed, the shaft or the bearing is located in an opening direction of the sliding structure than the harness holding portion.

According to this configuration, when the sliding structure is closed from its fully opened state for example, a compression force in the axial direction is applied to the wire harness. Thus, by the compression reaction force, a pressing force toward the fixing structure around the shaft or the bearing is applied to the harness holding portion of the swinging member at the fixing structure side, allowing the harness holding portion of the swinging member at the fixing structure side to smoothly turn toward the fixing structure. Here, "opening direction of sliding structure" corresponds to rearward when the sliding structure is opened rearward of the fixing structure.

A fifth aspect provides the power feeding structure for a sliding structure according to any one of the first to third aspects, wherein the swinging member at the sliding structure side is turnably supported to a fixing member by the shaft or the bearing, and the fixing member is fixed to the sliding structure.

According to this configuration, the sliding structure-side power feeding structure (power feeding device) is easily and inexpensively made, reduced in weight, by a small number of parts, i.e., the swinging member and the fixing member.

### Advantageous Effects of Invention

According to the invention described in the first aspect, in the middle of opening and closing motion of the sliding structure, the swinging member at the sliding structure side can smoothly turn utilizing the pressing load in the axial direction of the wire harness. Therefore, it is possible to prevent the wear of the shaft or the bearing of the swinging member, and prevent the increase in the friction resistance of the shaft or the bearing of the swinging member, allowing the sliding structure to smoothly open and close, and allowing the wire harness to smoothly bend. As a result, a driving force of an opening/closing motor of the sliding structure can be reduced, and the motor itself can be downsized, thereby reducing the cost and saving space. Further, the bending durability of the wire harness can be improved, and the wire harness can be prevented from jumping out from the passenger getting in-out opening on the fixing structure side, for example, thereby preventing a passenger from being caught when getting in or out from the opening, and preventing the deterioration of the visual quality.

According to the invention described in the second aspect, when the sliding structure is opened or closed, a pressing force in the opening direction of the sliding structure is applied to the harness holding portion of the sliding structure-side swinging member around the shaft or the bearing by a compression reaction force of the wire harness, and the harness holding portion is smoothly turned in a direction separating from the sliding structure. Therefore, the wire harness can smoothly be bent substantially in the S-shape between the swinging member and the harness supporting member when the sliding structure is half-opened. As a result, the bending durability of the wire harness can be improved, the wire harness can be prevented from jumping out from the passenger getting in-out opening on the fixing structure side, preventing a passenger from being caught when getting in or out from the opening, and preventing the deterioration of the visual quality.

According to the invention described in the third aspect, when the sliding structure is opened or closed, a pressing force in the opening direction of the sliding structure is applied to the harness holding portion of the sliding structure-side swinging member around the shaft or the bearing by a compression reaction force of the wire harness, and the harness holding portion is maintained in a state where it approaches the sliding structure. Therefore, the wire harness can smoothly be bent substantially in semi-circular form between the swinging member and the harness supporting member when the sliding structure is half-opened. As a result, the bending durability of the wire harness can be improved, preventing the wire harness from jumping out from the passenger getting in-out opening on the fixing structure side, preventing a passenger from being caught when getting in or out from the opening, and preventing the deterioration of the visual quality.

According to the invention described in the fourth aspect, in the middle of opening and closing motion of the sliding structure, the fixing structure-side swinging member can smoothly turn utilizing the pressing load in the axial direction of the wire harness. Therefore, it is possible to prevent wear and friction resistance of the shaft or the bearing of the fixing structure-side swinging member from increasing, and it is possible to more smoothly open and close the sliding structure and to more smoothly bend the wire harness. As a result, a driving force of the opening/closing motor of the sliding structure can be further reduced, and the motor itself can be downsized, achieving cost reduction and space saving. Further, the bending durability of the wire harness can be further improved, the wire harness can be reliably prevented from jumping out from the passenger getting in-out opening on the fixing structure side, for example, thereby preventing a passenger from being caught when getting in or out from the opening and preventing the deterioration of the visual quality.

According to the invention described in the fifth aspect, the power feeding structure of the sliding structure can easily and inexpensively be made, reduced in size, by a small number of parts, i.e., the swinging member and the fixing member, and the power feeding structure of the sliding structure can be placed in the sliding structure in a space-saving manner.

### Brief Description of Drawings

Fig. 1 is a perspective view showing one embodiment of a sliding structure-side swinging member in a power feeding structure for a sliding structure according to the present invention;
Fig. 2 is a perspective view showing a state where the swinging member is assembled into a fixing member and they are turned in the horizontal direction, and the state is shown by a solid line with respect to each turning trajectory;
Fig. 3 is a plan view showing a state where a wire harness is connected to the swinging member;
Fig. 4 is a plan view showing operation of one embodiment of the power feeding structure for the sliding structure of the present invention using the swinging member, and the operation is shown by a solid line with respect to each trajectory when the sliding structure is opened and closed;
Fig. 5 is a plan view of operation when the swinging members of the same configurations are used for both the sliding structure and the fixing structure, and the operation is shown by a solid line with respect to each turning trajectory when the sliding structure is opened and closed;
Fig. 6 is a perspective view showing another embodiment of the sliding structure-side swinging member in the power feeding structure for the sliding structure of the present invention;
Fig. 7 is a perspective view showing a state where the swinging member is assembled into a fixing member and they are turned in the horizontal direction, and the state is shown by a solid line with respect to each turning trajectory;
Fig. 8 is a plan view showing a state where the wire harness is connected to the swinging member;
Fig. 9 is a plan view of operation of another embodiment of the power feeding structure for the sliding structure of the present invention in which the swinging member is used for both the sliding structure and the fixing structure, and the operation is shown by a solid line with respect to each turning trajectory when the sliding structure is opened and closed;
Fig. 10 is a plan view of normal action in one embodiment of a conventional power feeding structure for a sliding structure, and the action is shown by a solid line with respect to each trajectory when the sliding structure is opened and closed; and
Fig. 11 is a plan view of abnormal action of the conventional power feeding structure, and the action is shown by a solid line with respect to each trajectory when the sliding structure is opened and closed.

### Description of Embodiments

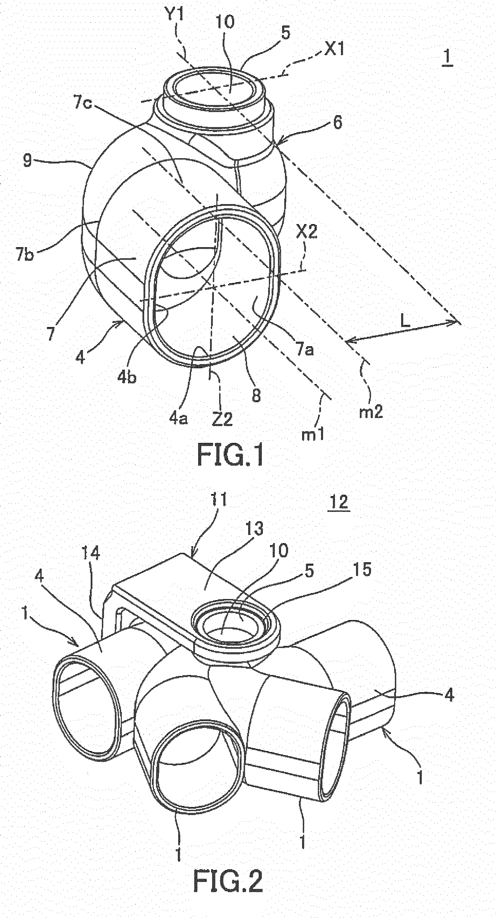

Figs. 1 to 4 show one embodiment of a power feeding structure for a sliding structure according to the present invention.

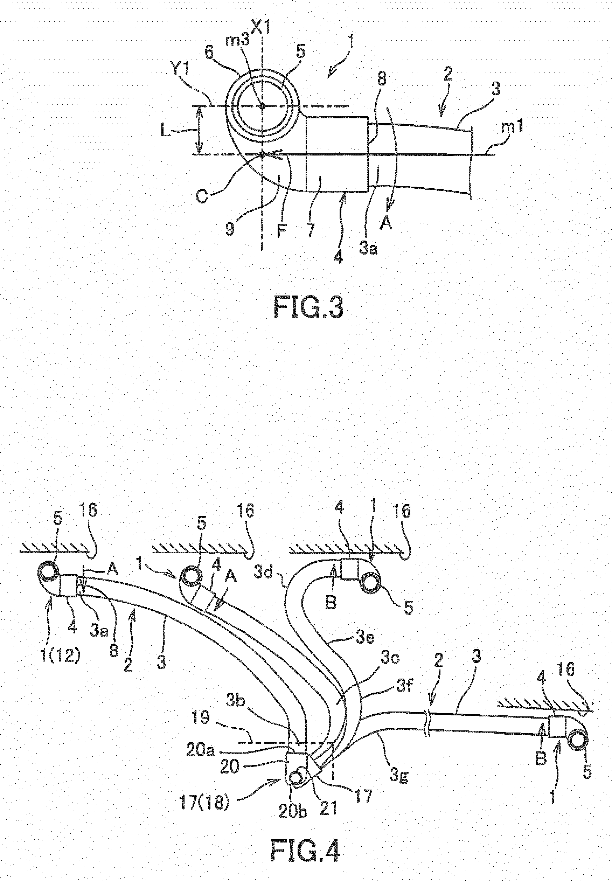

Fig. 1 shows one embodiment of a swinging member provided on the side of a sliding door of an automobile. This swinging member 1 is made of synthetic resin, and includes a horizontal harness holding portion 4 for holding a corrugated tube (i.e. , external member or harness protection member) 3 of a wire harness 2 (Fig. 3), a vertical circular and annular shaft 5 which is offset (offset dimension is shown by reference sign L) in a radial direction (rightward in Fig. 1) of the harness holding portion from the harness holding portion 4, and a base wall 6 having the shaft 5.

In this example, the harness holding portion 4 has a long diameter portion 4a in the vertical direction, and a short diameter portion 4b in the lateral direction (i.e. , the lateral direction in Fig. 1). The harness holding portion 4 is formed into a cylindrical shape having a long circular vertical cross section. The shape of the harness holding portion 4 is prescribed in accordance with a shape of a cross section of the synthetic resin corrugated tube 3 (Fig. 3) to be used. When a corrugated tube having a circular cross section (not shown) is used, a vertical cross section of the harness holding portion 3 is formed circular. The corrugated tube 3 is an existing concertina harness protection tube in which concave grooves (valleys) and convex portions (mountains) (both not shown) are alternately arranged in a longitudinal direction of the tube.

A peripheral wall 7 of the harness holding portion 4 is vertically divided into two (it is also possible to vertically divide swinging member 1 itself into two) for example, and a convex portion (not shown) which engages with the concave portion of concave and convex portions (valleys and mountains) (not shown) in the longitudinal direction of the corrugated tube 3 (Fig. 3) is provided on an inner peripheral surface 7a of the harness holding portion 4 which continues with an opening 8 on the side of a turning tip end of the harness holding portion 4. One end 3a (Fig. 3) of the corrugated tube 3 is accommodated in the harness holding portion 4 in a state where the harness holding portion 4 is vertically divided and opened, the vertical divided harness holding portions are closed and bonded to each other by means of locking member (not shown), and the one end 3a of the corrugated tube 3 is held such that the one end 3a is not pulled out.

A portion 7b of the peripheral wall 7 of the harness holding portion 4 on the side of a turning base end integrally continues with a curved wall 9 which curves in the horizontal direction (rightward in Fig. 1), and the harness holding portion 4 integrally continues with a base wall (deep side wall) 6 having a pair of upper end lower annular shafts 5 (only upper shaft is illustrated in the drawing) through the curved wall 9. The base wall 6 has a substantially semi-circular lateral cross section (upper and lower portions are circular lateral cross sections) . The annular shafts 5 having smaller diameters than that of the base wall 6 project from upper and lower portions of the base wall 6, the upper annular shaft 5 projects higher than the curved wall 9 and an upper surface 7c of the peripheral wall 7 of the harness holding portion 4, and the lower annular shaft (not shown) projects lower than the curved wall 9 and a lower surface of the peripheral wall 7 of the harness holding portion 4.

Inside spaces 10 of the upper and lower shafts 5 concentrically continues with an inside space (not shown) of the base wall 6, the inside space of the base wall 6 intersects with an inside space of the curved wall 9 at right angles and continues (communicates) with the inside space of the curved wall 9, and the inside space of the curved wall 9 continues with an inside space (denoted by reference sign 8) of the peripheral wall 7 of the harness holding portion 4. A plurality of electric wire portions (not shown) which are pulled out from one end 3a of the corrugated tube 3 of the wire harness 2 (Fig. 3) bend rightward in Fig. 1 into substantially L shape from the inside space of the curved wall 9 along the inside space of the base wall 6, and further bend upward, pass through the inside space 10 of the upper annular shaft 5 and are routed on the side of the sliding door.

As shown in Fig. 1, the harness holding portion 4 projects in the horizontal direction (lateral direction), the upper and lower annular shafts 5 project in the vertical direction, a horizontal virtual line m2 is drawn above the harness holding portion 4 parallel to a horizontal center line m1 in the axial direction of the harness holding portion 4, a center line Y1 in a Y direction of center lines X1 and Y1 in X, Y directions in the opening 10 of the right side in Fig. 1 and of the upper annular shaft 5 is located parallel to the horizontal virtual line m2, and the center line Y1 in the Y direction is offset from the horizontal virtual line m2 in the horizontal direction (rightward in Fig. 1) by a dimension L. Center lines X2 and Z2 in X, Z directions in the opening 8 of the harness holding portion 4 intersect with the center line m1 in the axial direction (Y direction) of the harness holding portion 4 at right angles.

As shown in the plan view of Fig. 3, a center line Y1 in the Y direction which is parallel to the center line m1 in the axial direction of the center lines X1 and Y1 in the X, Y directions of the upper and lower annular shafts 5 is offset from the center line m1 in the axial direction of the harness holding portion 4 in a direction opposite from a bending direction of the corrugated tube 3 shown in Fig. 3 by a dimension L. The center line m1 in the axial direction of the harness holding portion 4 is located concentrically with the center line m1 of the axial direction (longitudinal direction) of the corrugated tube 3.

The fact that the harness holding portion 4 and the annular shafts 5 are offset does not mean that the center line m1 in the axial direction of the harness holding portion 4 and the center line m3 in the axial direction of the annular shafts 5 are offset parallel, but means that the harness holding portion 4 and the annular shafts 5 are offset in a state where the center line m1 in the axial direction of the harness holding portion 4 and the center line m3 in the axial direction of the annular shafts 5 are located in directions which are different from each other by 90° (intersect), i.e., in a state where a projecting direction of the harness holding portion 4 and a projecting direction of the annular shafts 5 are different from each other by 90°.

Fig. 2 shows a state where the swinging member 1 in Fig. 1 is turnably assembled into a fixing member 11, i.e., Fig. 2 shows one embodiment of the power feeding device (power feeding tool) 12 on the side of the sliding door which includes the swinging member 1 and the fixing member 11. In Fig. 2, for the sake of convenience of description, respective positions (four positions) of trajectories of turn of the swinging member 1 are shown by solid lines.

The fixing member 11 is made of synthetic resin, and a vertical cross section of thereof is formed into U shape, and the fixing member 11 includes a horizontal upper wall 13, a lower wall (not shown), and a vertical back wall 14 which connects the upper and lower walls 13 with each other. The lower wall has the same shape as that of the upper wall 13. Projecting tip ends of the upper and lower walls 13 are provided with bearing holes (bearings) 15 which turnably engage the upper and lower annular shafts 5 of the swinging member 1 with each other. At least the upper bearing hole 15 penetrates the upper wall 13, and the electric wire portions (not shown) of the wire harness 2 can be routed upward for example on the side of the sliding door through the inside space 10 of the upper annular shaft 5.

The sliding door-side power feeding device 12 is placed on the side of a lower portion of the sliding door, and the vertical back wall 14 of the fixing member 11 is fixed to a vertical metal sliding door panel 16 (Fig. 4) by fastening using a screw for example. The power feeding device 18 including a vehicle body-side swinging member 17 in Fig. 4 is placed on a lower side or in the vicinity of the lower side of a step portion of a coming in-out opening for example of the vehicle body (fixing structure) 19.

As shown in Fig. 2, as the sliding door is opened or closed, outer peripheral surfaces of the upper and lower annular shafts 5 of the swinging member 1 are slide-contacted along inner peripheral surfaces of the upper and lower bearing holes 15 of the fixing member 11, and at the same time, the swinging member 1 swings and turns in the front-back direction of the vehicle. The harness holding portion 4 of the swinging member 1 turns in a state where the harness holding portion 4 is always deviated (offset) in a radial direction of the annular shaft 5 or the bearing hole 15 from the annular shaft 5 or the bearing hole 15 which is a turning center.

The swinging member 1 shown on the right side in Fig. 2 corresponds to when the sliding door is fully opened, the swinging member 1 shown on the left side in Fig. 2 corresponds to when the sliding door is fully closed, and the swinging member 1 shown at a middle of Fig. 2 corresponds to when the sliding door is half-opened or near fully closed.

As shown on the right side of Fig. 2, when the sliding door is fully opened, the harness holding portion 4 of the swinging member 1 is located closer to the vehicle body than the annular shaft 5 or the bearing hole 15, and is largely separated from the back wall 14 of the fixing member 11, and is substantially parallel to the back wall 14 and projects forward of the vehicle. As shown on the left side of Fig. 2, when the sliding door is fully closed, the harness holding portion 4 of the swinging member 1 is located closer to the sliding door than the annular shaft 5 or the bearing hole 15, the harness holding portion 4 approaches or abuts against the back wall 14 of the fixing member 11, and the harness holding portion 4 is substantially parallel to the back wall 14, and projects rearward of the vehicle. As shown by the middle drawings in Fig. 2, when the sliding door is half-opened or near fully closed, the harness holding portion 4 of the swinging member 1 projects from the annular shaft 5 or the bearing hole 15 toward the vehicle body.

Fig. 3 shows a state where the one end 3a of the corrugated tube 3 of the wire harness 2 is connected to and held by the opening 8 of the harness holding portion 4 of the swinging member 1 of the sliding door-side power feeding device 12 (Fig. 2). Illustration of the fixing member 11 (Fig. 2) is omitted. The center line m1 in the axial direction (longitudinal direction) of the corrugated tube 3 and the center line m1 in the axial direction of the harness holding portion 4 of the swinging member 1 match with each other. The center line m3 in the axial direction (vertical direction) of the annular shaft 5 of the swinging member 1 or the bearing hole 15 of the fixing member 11 in Fig. 2, is offset from these center lines m1 in a direction opposite from the bending direction of the corrugated tube 3 in Fig. 3 by the dimension L as viewed from above.

According to this configuration, when a pressing load F in the axial direction m1 is generated in the corrugated tube 3 due to the rigidity thereof during the opening or closing (half-opening or half-closing) operation of the sliding door, the pressing load F in the axial direction m1 is applied to the harness holding portion 4 of the swinging member 1 with respect to the bearing hole 15 of the fixing member 11 (Fig. 2). Thus, a point C at which the center line m1 in the axial direction (Y direction) of the harness holding portion 4 and the center line X1 in the X direction of the annular shaft 5 intersect with each other at right angles, i.e., a point C which is offset from the center line m3 in the axial direction of the annular shaft 5 by the dimension L, acts as a point of effort. Thus, according to the principle of leverage, the swinging member 1 reliably turns in the direction of the pressing load F around the annular shaft 5, and the harness holding portion 4 reliably turns in the A direction (i.e., clockwise direction), i.e., in the bending direction of the corrugated tube 3.

The pressing load F of the corrugated tube 3, i.e., a pressing force F of the corrugated tube 3 for pressing the harness holding portion 4 of the swinging member 1 in the axial direction m1 acts as a rotation assisting force of the swinging member 1. Thus, the swinging member 1 starts rotating in the clockwise direction in the A direction as soon as the sliding door slides in the closing direction from the fully opened state of the sliding door in Fig. 3. An operation of the power feeding structure for the sliding structure will be described below in detail with reference to Fig. 4.

Fig. 4 shows the wire harness 2 mounted with the power feeding devices 12 and 18 is routed between the left sliding door (denoted by reference sign 16) of the automobile and the vehicle body 19 (i.e., routed in a connecting portion), and shows, by solid lines for the sake of convenience of description, moving trajectories of the wire harness 2 and the power feeding devices 12 and 18 during opening or closing the sliding door 16. In the power feeding devices 12 and 18, only the swinging members 1 and 17 are shown, and illustration of the fixing member 11 (Fig. 2) is omitted.

The left drawing of Fig. 4 shows a fully opened state of the sliding door 16, the right drawing of Fig. 4 shows a fully closed state of the sliding door 16, and the middle drawings of Fig. 4 show a half-opened state of the sliding door 16. In the right sliding door (not shown) of the automobile, the power feeding devices 12 and 18 and the wire harness 2 are placed symmetrically in the vehicle with respect to Fig. 4.

As shown in the left drawing in Fig. 4, when the sliding door 16 is fully opened, the harness holding portion 4 of the swinging member 1 of the sliding door-side power feeding device 12 is horizontally oriented forward of the vehicle (opening end 8 of harness holding portion 4 is oriented forward of vehicle), and the vertical annular shaft 5 is offset outward of the vehicle (closer to sliding door) as compared with the harness holding portion 4. A harness holding portion 20 (opening end 20a of the harness holding portion 20) of the swinging member 17 of the vehicle body-side power feeding device 18 is oriented outward in the thickness direction of the sliding door. The wire harness 2 curves with a large radius while being pulled diagonally rearward from the vehicle body-side swinging member 17 to the sliding door-side swinging member 1.

As one example, the vehicle body-side power feeding device 18 of this example includes the swinging member 17 which is straight as viewed from above, and the fixing member having bearing holes (not shown) in which upper and lower annular shafts 21 of the swinging member 17 are turnably engaged. The swinging member 17 includes the cylindrical harness holding portion 20, and upper and lower annular or solid shafts 21 which intersect with a center line of the harness holding portion 20 in the axial direction at right angles and which are vertically provided on upper and lower peripheral wall (denoted by reference sign 20) of the harness holding portion 20 on the side of the base end.

The shafts 21 are not offset from the harness holding portion 20 in the radial direction of the harness holding portion, and are located with offset-zero. The opening end 20a of the harness holding portion 20 on the side of the turning tip end and an opening 20b of the harness holding portion 20 on the side of the base end coaxially penetrate, for example. While the other end 3b of the corrugated tube 3 of the wire harness 2 is held by the harness holding portion 20, a plurality of electric wires in the corrugated tube are pulled out from the opening 20b located on the side of the base end of the harness holding portion 20 toward the vehicle body side (power supply side).

As shown in the second drawing from the left in Fig. 4, when the sliding door 16 is slightly closed forward from its fully opened state (immediately after closing operation is carried out), the corrugated tube 3 of the wire harness 2 is compressed in the axial direction. And, by the compression reaction force, a pressing force toward the rear of the vehicle around the shaft 5, i.e., a rotation driving force in the A direction, acts on the sliding door-side swinging member 1. The swinging member 1 is turned in the A direction (i.e., clockwise direction) by the pressing force F (Fig. 3) around the shaft 5, and the harness holding portion 4 turns diagonally forward in the clockwise direction while separating from the sliding door 16 toward the vehicle body 19.

The wire harness 2 is routed diagonally forward from the swinging member 1 toward the vehicle body 19, projects forward in the curved form with a slightly small radius in the vicinity of the vehicle body-side swinging member 17 (curved portion is shown by reference sign 3c), and the wire harness 2 continues with the vehicle body-side swinging member 17 which turns diagonally forward in the clockwise direction. As shown in the second drawing from the left at the time of a normal state in Fig. 10 which is described in the conventional technique, the sliding door-side swinging member 1 may turn more clockwisely in the second drawing from the left in Fig. 4, and the wire harness 2 may be curved substantially in S shape. Any motion is normal.

If the sliding door 16 further continues the closing operation from the state of the second drawing from the left in Fig. 4, the sliding door-side swinging member 1 receives a rotation driving force in the B direction by a compression reaction force of the corrugated tube 3 around the shaft 5 when the sliding door 16 is half-opened or almost is fully closed as shown in a third drawing from the left in Fig. 4, the sliding door-side swinging member 1 turns largely clockwisely toward the sliding door 16, the harness holding portion 4 is oriented rearward of the vehicle substantially parallel to the sliding door 16, and the harness holding portion 4 is located between the shaft 5 and an inner panel (16) of the sliding door 16. A position of the shaft 5 with respect to the sliding door 16 is not changed, and only the harness holding portion 4 approaches the sliding door 16.

The wire harness 2 is pulled out rearward from the harness holding portion 4 of the swinging member 1 and is immediately folded back in the curved form (folded back curved portion is shown by reference sign 3d), the wire harness 2 is routed diagonally forward from the folded back curved portion 3d toward the vehicle body (diagonally forward routed portion is shown by reference sign 3e), the wire harness 2 curves with an intermediate radius from the routed portion 3e to the diagonally forward-oriented vehicle body-side swinging member 17 (curved portion is shown by reference sign 3f), and projects forward. The wire harness 2 is bent substantially in S shape as viewed from above by the curved portion 3d which projects rearward close to the sliding door and the curved portion 3f which projects forward toward the vehicle body.

The sliding door 16 further continues the closing operation. Accordingly, the sliding door 16 slides forward while approaching the vehicle body along a curved guide rail (not shown) on the side of the vehicle body, and when the sliding door 16 is fully closed as shown in the right drawing in Fig. 4, the harness holding portion 4 of the sliding door-side swinging member 1 is oriented rearward between the vehicle body-side shaft 5 and the door inner panel 16.

The wire harness 2 is straightly routed rearward from the harness holding portion 4 substantially parallel to the sliding door 16, the wire harness 2 is bent substantially in L shape (bent portion is shown by reference sign 3g) in the vicinity of the swinging member 17 which inclines diagonally forward on the side of the vehicle body, and continues with the vehicle body-side swinging member 17. As shown in the right drawing in Fig. 10 of the conventional example, the wire harness 2 may be routed substantially straightly in a slightly diagonal direction from the sliding door-side swinging member 1 to the vehicle body-side swinging member 17.

When the sliding door 16 is opened from the fully closed state, a compression reaction force F (Fig. 3) in the axial direction acts on the corrugated tube 3 of the wire harness 2, and a rotation driving force in the B direction acts on the sliding door-side swinging member 1. As the sliding door 16 is opened, and the wire harness 2 bends substantially in S shape as shown in the third drawing from the left while maintaining the fully closed state of the swinging member 1. Next, as the sliding door 16 slides and moves rear ward, the sliding door-side swinging member 1 turns in the counterclockwise direction as shown in the second drawing from the left in Fig. 4, and the swinging member 1 is completely inverted in the longitudinal direction when the sliding door 1 is fully opened as compared with the fully closed state of the sliding door 1 as shown in the left drawing in Fig. 4.

That is, when the sliding door 16 is opened rearward from the fully closed state and when the sliding door 16 is closed forward from the fully opened state, movements (trajectories) of the swinging members 1 and 17 and movement (trajectory) of the wire harness 2 on the side of the sliding door and on the side of the vehicle body are the same. This is because the shaft 5 and the harness holding portion 4 of the sliding door-side swinging member 1 are offset, and as the sliding door 16 is opened or closed, the sliding door-side swinging member 1 smoothly and reliably turns without being caught.

According to this, the bearings 15 of the fixing members 11 (Fig. 2) and the shafts 5 and 21 of the sliding door-side and vehicle body-side swinging members 1 and 17 smoothly come into slide-contact with each other with small friction resistance. Thus, wear of the shafts 5 and 21 and the bearing 15 can be prevented, the wire harness 2 can smoothly bend without being caught, the bending stress of the wire harness 2 can be suppressed to a small value, and the bending durability of the wire harness 2 can be improved. When the sliding door 16 is half-opened, as shown in the third drawing from the left in Fig. 11 of the conventional technique, the wire harness 16 does not project toward the substantially U-shaped coming in-out opening. Therefore, inconvenience that a foot of a passenger is caught in the wire harness 16 or visual quality is deteriorated is solved.

In the configuration of the conventional technique in Fig. 10, to normally turn the sliding door-side swinging member, it is necessary to forcibly turn the swinging member when the sliding door is half-opened using the spring member (torsion coil spring) for example (present applicant first proposed power feeding device using spring member in Japanese Patent Application No. 2012-241750), but, as shown in Figs. 1 to 4, since the shaft 5 and the harness holding portion 4 of the sliding door-side swinging member 1 are offset and the rotation assisting force is obtained, it is possible to set a spring force of the spring member small, or it is possible to eliminate the need for the spring member. As a result, the opening/closing operation force of the sliding door 16 becomes small, the size and weight of the door opening/closing operation motor can be reduced, and the electricity consumed can be reduced.

Although the annular hollow shaft 5 having the wire harness inserting portion is used as the shaft 5 of the swinging member 1 in this embodiment, the shape of the shaft is not limited to this shape, the upper side of the sliding door-side swinging member 1 can be provided with a harness pulling-out annular shaft 5, and the lower side of the swinging member 1 can be provided with a solid shaft. When the harness pulling-out hole 10 (Fig. 1) is provided in the vertical base wall 6 horizontally, upper and lower horizontal walls (not shown) of the base wall 6 can be provided with upper and lower solid shafts. This is also the same for another embodiment shown in Fig. 9.

It is possible to employ such a configuration that the upper side of the sliding door-side swinging member 1 is provided with an annular shaft 5, the lower side of the swinging member 1 is provided with a bearing (15) such as a bearing hole, the upper side of the fixing member 11 (Fig. 2) is provided with the bearing hole 15, the lower side of the fixing member 11 is provided with an annular or solid shaft (5), upper and lower sides of the swinging member 1 are provided with bearings (15), and upper and lower sides of the fixing member 11 are provided with shafts (5). In this case, the bearing (15) and the harness holding portion 4 of the sliding door-side swinging member 1 are offset. This is also the same for the other embodiment shown in Fig. 9.

Although the annular shaft 5 is provided on the upper side to pull the electric wire portion of the wire harness 2 upward from the sliding door-side swinging member 1, the vehicle body-side swinging member 17 is for horizontally pulling out the electric wire portion of the wire harness 2 toward the vehicle body, and the upper and lower sides can be provided with a solid shaft 21 or a bearing such as a bearing hole. In this case, the fixing member (not shown) is provided with a bearing of a shaft.

The working effect of the sliding door-side power feeding device 12 in Fig. 4 is also exerted when the swinging member (harness supporting member) 17 of the vehicle body-side power feeding device 18 is replaced by a harness supporting member (not shown) (harness fixing tool) which cannot swing. In this case, it is preferable that the harness supporting member of the vehicle body-side power feeding device 18 inclines diagonally forward about 45° like the swinging member 17 shown in the second to fourth drawings from the left in Fig. 4.

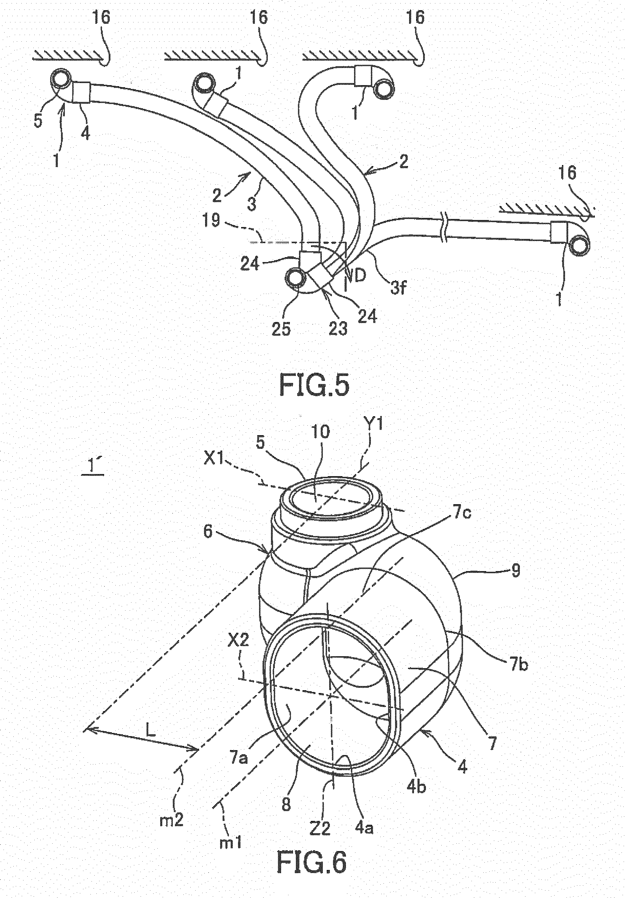

Although the harness holding portion 4 and the shaft 5 are offset with respect to the sliding door-side swinging member 1 in this embodiment, it is also effective to offset the harness holding portion 24 and a shaft 25 or a bearing with respect to the vehicle body-side swinging member (harness supporting member) 23 as shown in Fig. 5. Since the sliding door-side swinging member 1 is the same as that of the example shown in Fig. 4, description thereof will be omitted.

As shown in a left drawing in Fig. 5, when the sliding door 16 is fully opened, the shaft 25 of a vehicle body-side swinging member 23 is placed posterior to the harness holding portion 24 which projects in the thickness direction of the sliding door. As shown in intermediate and right drawings in Fig. 5, when the sliding door is half-opened and is fully closed, the shaft 25 of the vehicle body-side swinging member 23 is placed posterior to the harness holding portion 24 which is oriented diagonally forward.

According to this, a rotation driving force in the D direction (i.e., clockwise direction) acts on the vehicle body-side swinging member 23 by a compression reaction force of the corrugated tube 3 of the wire harness 2 from the instant when the sliding door 16 is fully opened (left drawing in Fig. 5) to the instant when the sliding door 16 is half-opened (especially second drawing from left in Fig. 5), and the wire harness 2 is induced to bend in substantially S shape between the sliding door 16 and the vehicle body 19 (connecting portion) when the sliding door 16 is half-opened (third drawing from left in Fig. 5).

When the sliding door 16 is opened from the fully closed state, the rotation driving force in the D direction (i.e., clockwise direction) acts on the vehicle body-side swinging member 23 by the compression reaction force of the corrugated tube 3. Therefore, the wire harness portion 3f in the vicinity of the vehicle body-side swinging member 23 is maintained on the side of the vehicle body, and the wire harness 2 when the sliding door 16 is half-opened (third drawing from left in Fig. 5) is induced to bend in substantially S shape.

According to this, the wire harness 2 is smoothly bent without being caught or buckling. This effect is prone to be exerted also when the sliding door-side swinging member 1 is formed into that of the conventional technique for example (shape in which harness holding portion 4 and shaft 5 are placed on same straight line).

For example, when the vehicle body-side swinging member 23 is placed such that it is inverted in the front-back direction of the vehicle in Fig. 5 and the shaft 25 is placed anterior to the harness holding portion 24, the swinging member 23 turns in the counterclockwise direction by the compression reaction force of the corrugated tube 3, the harness holding portion 24 turns rearward of the vehicle, the wire harness 2 does not bend in substantially S shape when the sliding door 16 is half-opened, and the wire harness 2 is not easily inverted smoothly when the sliding door 16 is opened or closed. Therefore, as shown in the left drawing in Fig. 5, it is preferable that the shaft 25 and the harness holding portion 24 are offset so that the shaft 25 of the vehicle body-side swinging member 23 is located posterior to the harness holding portion 24 when the sliding door 16 is fully opened.

Although the corrugated tube 3 is used as the external member of the wire harness 2 in this embodiment, it is also possible to use an existing caterpillar-shaped external member (not shown) formed by connecting a plurality of rigid crown members (not shown) made of synthetic resin to each other in the longitudinal direction instead of the corrugated tube 3. The crown member is formed into a rectangular cylindrical shape whose four sides are surrounded by plate walls for example, any one of the plate walls is provided with a slit for inserting electric wires, front sides of the upper and lower plate walls are provided with connection hinge shaft, and rear sides of the upper and lower plate walls are provided with recesses with which the hinge shafts engage. This is also the same for the later-described other embodiment.

The corrugated tube 3 is held by and fixed to the harness holding portions 4, 20 and 24 of the swinging members 1, 17 and 23, the plurality of electric wires in the corrugated tube are not fixed to the swinging members 1, 17 and 23 and pass through the inside spaces of the swinging members 1, 17 and 23 (this is also same in caterpillar external member). However, even when the plurality of electric wires are fixed to the swinging members 1 and 23 by fastening using bands without using the external member, this is effective because a turning driving force acts on the swinging members 1 and 23 by the compression reaction force of the plurality of electric wires when the sliding door 16 is opened or closed by the offset structure between the harness holding portions (harness fixing portions) 4 and 24 of the swinging members 1 and 23 and the shafts 5 and 25 or the bearings 15. This is also the same for the later-described other embodiment.

The present invention is also effective as a power feeding device for a sliding structure and a routing structure for power feeding wire harness in addition to the power feeding structure for the sliding structure. This is also the same for the later-described other embodiment.

Figs. 6 to 9 show another embodiment of the power feeding structure for a sliding structure of the present invention.

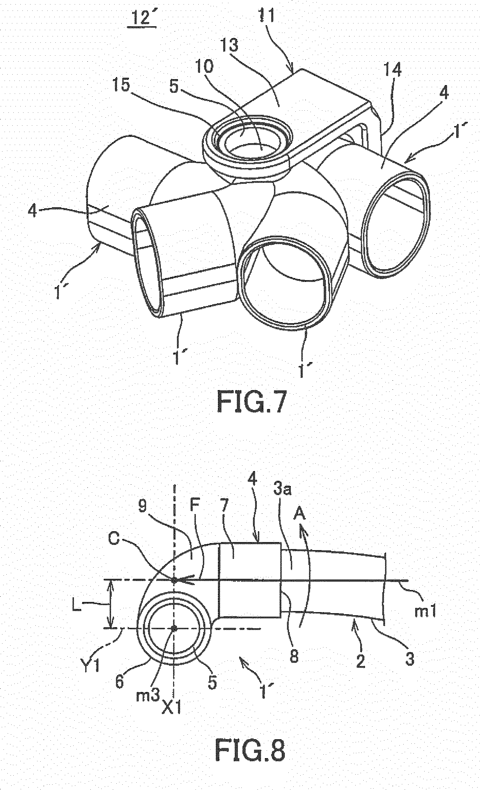

The power feeding structure for a sliding structure of this embodiment has a shape obtained by inverting the sliding door-side swinging member 1 in the power feeding structure for sliding structure shown in Figs. 1 to 3 and 5 symmetrically with respect to a thickness direction of the sliding door (lateral direction of vehicle) (see Figs. 6 to 7), the harness holding portion 4 of a sliding door-side swinging member 1' is placed closer to the sliding door than shafts 5 when the sliding door 16 is fully opened, and the shafts 5 of the sliding door-side swinging member 1' is placed closer to the sliding door than the harness holding portion 4 when the sliding door 16 is fully closed (see Figs. 8 to 9).

The same swinging member (harness supporting member) 23 which is the same as that shown in Fig. 5 is placed on the side of the vehicle body. The same reference signs are allocated to the same constituent portions as those of Figs. 1 to 3 and 5, and detailed description will be omitted.

As shown in Fig. 6, a swinging member 1' includes a horizontal harness holding portion 4 made of synthetic resin for holding the corrugated tube 3 of the wire harness 2 (Fig. 8), a vertical circular and annular shaft 5 which is offset in the radial direction (leftward in Fig. 6) of the harness holding portion from the harness holding portion 4 (offset dimension is shown by reference sign L), and a base wall 6 having the shaft 5.

In this example, the harness holding portion 4 includes a long diameter portion 4a in the vertical (up-down) direction and a short diameter portion 4b in the lateral direction (left-right direction in Fig. 6), and the harness holding portion 4 is formed into a cylindrical shape having a long circular vertical cross section. The shape of the harness holding portion 4 is appropriately prescribed in accordance with a cross section shape of the synthetic resin corrugated tube 3 (Fig. 8) to be used.

A peripheral wall 7 of the harness holding portion 4 includes an opening 8 on the side of the turning tip end, and one end 3a of the corrugated tube 3 (Fig. 8) is accommodated and held on the side of an inner peripheral surface 7a of the peripheral wall 7. A portion 7b on the side of the turning base end of the peripheral wall 7 of the harness holding portion 4 integrally continues with a curved wall 9 which curves in the horizontal direction (leftward in Fig. 6), and the harness holding portion 4 integrally continues with a base wall (deep wall) 6 having a substantially semi-circular lateral cross section (cross sections of upper and lower portions are circular) having the pair of upper and lower annular shafts 5 through the curved wall 9. The annular shafts 5 having a diameter smaller than that of the base wall 6 project from the upper and lower portions of the base wall 6, the upper annular shaft 5 projects higher than the curved wall 9 and an upper surface 7c of the peripheral wall 7 of the harness holding portion 4, and the lower annular shaft (not shown) projects lower than the curved wall 9 and a lower surface of the peripheral wall 7 of the harness holding portion 4.

Inside spaces 10 of the upper and lower shafts 5 coaxially continue with an inside space (not shown) of the base wall 6, the inside space of the base wall 6 intersect with an inside space of the curved wall 9 at right angles and continues (communicates) with the inside space of the curved wall 9, and the inside space of the curved wall 9 continues with the inside space (denoted by reference sign 8) of the peripheral wall 7 of the harness holding portion 4. A plurality of electric wire portions (not shown) pulled out from the one end 3a of the corrugated tube 3 of the wire harness 2 (Fig. 8) are bent from the inside space of the curved wall 9 leftward in Fig. 6 substantially in L shape along the inside space of the base wall 6, and further bent upward, pass through the inside space 10 of the upper annular shaft 5, and are routed on the side of the sliding door.

As shown in Fig. 6, the harness holding portion 4 projects in the horizontal direction (lateral direction), the upper and lower annular shafts 5 project in the vertical direction, a horizontal virtual line m2 is drawn above the harness holding portion 4 parallel to the horizontal center line m1 in the axial direction of the harness holding portion 4, a center line Y1 in the Y direction of the center lines X1, Y1 in the X, Y directions in the opening 10 of the left and upper annular shaft 5 in Fig. 6 is located parallel to the horizontal virtual line m2, and the center line Y1 in the Y direction is offset from the horizontal virtual line m2 in the horizontal direction (leftward in Fig. 6) by a dimension L. Center lines X2 and Z2 in the X, Z directions in the opening 8 of the harness holding portion 4 intersect with the center line m1 of the axial direction (Y direction) of the harness holding portion 4.

When viewing the swinging member 1' from above as in Fig. 8, among the center lines X1 and Y1 in the X and Y directions of the upper and lower annular shafts 5, the center line Y1 in the Y direction which is parallel to the center line m1 in the axial direction is offset by dimension L from the center line m1 in the axial direction of the harness holding portion 4 toward the bending direction of the corrugated tube 3 in Fig. 8. The center line m1 in the axial direction of the harness holding portion 4 is located coaxially with the center line m1 of the axial direction (longitudinal direction) of the corrugated tube 3.

Fig. 7 shows a state where the swinging member 1' in Fig. 6 is turnably assembled into the fixing member 11, i.e., one embodiment of the sliding door-side power feeding device (power feeding tool) 12' includes the swinging member 1' and the fixing member 11. In Fig. 7, for the sake of convenience of description, and each position (four positions) of trajectories which turned the swinging member 1' are shown by solid lines.

The fixing member 11 is made of synthetic resin and a vertical cross section thereof is formed into U shape, and includes horizontal upper wall 13 and lower wall (not shown), and a vertical back wall 14 which connects the upper and lower walls 13 to each other. The lower wall has the same shape as that of the upper wall 13. Projecting tip ends of the upper and lower walls 13 are provided with bearing holes (bearings) 15 which turnably engage the upper and lower annular shafts 5 of the swinging member 1' with each other. At least the upper bearing hole 15 penetrates the upper wall 13, and electric wire portions (not shown) of the wire harness 2 can be routed upward on the side of the sliding door for example through the inside space 10 of the upper annular shaft 5.

A sliding door-side power feeding device 12' is placed on the side of a lower portion of the sliding door, and the vertical back wall 14 of the fixing member 11 is fixed to a vertical metal sliding door panel 16 (Fig. 9) by fastening using a screw for example. A power feeding device 26 including the vehicle body-side swinging member 23 in Fig. 9 is placed on the lower side or in the vicinity of the lower side of a step portion of a coming in-out opening of the vehicle body (fixing structure) 19 for example.

As shown in Fig. 7, as the sliding door is opened or closed, the outer peripheral surfaces of the upper and lower annular shafts 5 of the swinging member 1' come into sliding contact with inner peripheral surfaces of the upper and lower bearing holes 15 of the fixing member 11 and in this state, the swinging member 1' swings and turns in the front-back direction of the vehicle. The harness holding portion 4 of the swinging member 1' turns in a state where the harness holding portion 4 is always deviated (offset) in the radial direction of the annular shaft 5 or the bearing hole 15 with respect to the annular shaft 5 or the bearing hole 15 which is a turning center.

The right side in Fig. 7 shows the swinging member 1' when the sliding door is fully opened and is half-opened, and the left side in Fig. 7 shows the swinging member 1' when the sliding door is fully closed. The intermediate drawings in Fig. 2 show the swinging member 1' between the fully opened state and the half-opened state of the sliding door.

As shown in the right drawing in Fig. 7, when the sliding door is fully opened and is half-opened, the harness holding portion 4 of the swinging member 1' is located closer to the sliding door 16 (Fig. 9) than the annular shaft 5 or the bearing hole 15, the harness holding portion 4 approaches or abuts against the back wall 14 of the fixing member 11 and is located substantially parallel thereto, and projects forward of the vehicle. As shown in the left drawing in Fig. 7, when the sliding door is fully closed, the harness holding portion 4 of the swinging member 1' is located closer to the vehicle body 19 (Fig. 9) than the annular shaft 5 or the bearing hole 15, and is separated away from the back wall 14 of the fixing member 11 and is located substantially parallel to the back wall 14, and projects rearward of the vehicle. As shown in the intermediate drawings in Fig. 7, between the half-opened state and the fully closed state of the sliding door, the harness holding portion 4 of the swinging member 1' projects toward the side of the vehicle body from the annular shaft 5 or the bearing hole 15, and is located closer to the vehicle body 19 (Fig. 9) than the shaft 5 or the bearing hole 15.

Fig. 8 shows a state where the one end 3a of the corrugated tube 3 of the wire harness 2 is connected to and held by the opening 8 of the harness holding portion 4 of the swinging member 1' of the sliding door-side power feeding device 12' (Fig. 7) when the sliding door 16 (Fig. 9) is fully opened. Illustration of the fixing member 11 (Fig. 7) is omitted. The center line m1 in the axial direction (longitudinal direction) of the corrugated tube 3 and the center line m1 in the axial direction of the harness holding portion 4 of the swinging member 1' match with each other. The center line m3 in the axial direction (vertical direction) of the annular shaft 5 of the swinging member 1' or the bearing hole 15 of the fixing member 11 (Fig. 7) is offset from these center lines m1 in the bending direction of the corrugated tube 3 in Fig. 8 as viewed from above by the dimension L.

According to this configuration, when a pressing load F (Fig. 8) in the axial direction m1 caused by rigidity of the corrugated tube 3 is generated in the corrugated tube 3 for example when the sliding door 16 (Fig. 9) is opened or closed (half-opened or half-closed), a pressing load F in the axial direction m1 acts on the harness holding portion 4 of the swinging member 1' with respect to the bearing hole 15 of the fixing member 11 (Fig. 7), a point C at which the center line m1 in the axial direction (Y direction) of the harness holding portion 4 and the center line X1 in the X direction of the annular shaft 5 intersect with each other at right angles, i.e., a point C which is offset from the center line m3 in the axial direction of the annular shaft 5 by the dimension L, acts as the point of effort. Thus, according to the principle of leverage the swinging member 1' reliably turns in the direction of the pressing load F around the annular shaft 5 by the principle of leverage, and the harness holding portion 4 reliably turns in the A direction (i.e., counterclockwise direction), i.e., in a direction opposite from the bending direction of the corrugated tube 3 in Fig. 8. The pressing load F is also called a compression reaction force of the corrugated tube 3.

The pressing load F of the corrugated tube 3, i.e., a pressing force F in which the corrugated tube 3 presses the harness holding portion 4 of the swinging member 1' in the axial direction m1 acts as a rotation assisting force of the swinging member 1'. According to this, if the sliding door 16 (Fig. 9) of Fig. 8 slides in the closing direction from its fully opened state, a rotation driving force in the counterclockwise direction toward the sliding door 16 acts on the swinging member 1 as shown by the arrow A. An operation of the power feeding structure for a sliding structure will be described below in detail using Fig. 9.

Fig. 9 shows a state where the wire harness 2 in which the sliding door-side power feeding device 12' and the vehicle body-side power feeding device 26 are assembled is routed between the left sliding door 16 of the automobile and the vehicle body 19 (connecting portion), and moving trajectories of the wire harness 2 and the power feeding devices 12' and 26 when the sliding door 16 is opened or closed are shown by solid lines for the sake of convenience of description. In the power feeding devices 12' and 26, only the swinging members 1' and 23 are shown, and illustration of the fixing member 11 (Fig. 7) is omitted. The vehicle body-side swinging member 23 is also called a harness supporting member.

A left drawing in Fig. 9 shows a fully opened state of the sliding door 16, a right drawing in Fig. 9 shows a fully closed state of the sliding door 16, a second drawing from the left in Fig. 9 shows a half-opened state of the sliding door 16, and a third drawing from the left in Fig. 9 shows a near fully closed state (initial state of opening) of the sliding door 16. In the right sliding door (not shown) of the automobile, the power feeding devices 12' and 26 and the wire harness 2 are placed symmetrically in the widthwise direction in Fig. 9.

As shown in the left drawing in Fig. 9, when the sliding door 16 is fully opened, the harness holding portion 4 of the swinging member 1' of the sliding door-side power feeding device 12' is oriented forward of the vehicle horizontally around the vertical annular shaft 5 as a fulcrum (opening 8 which is turning tip end of harness holding portion 4 is oriented forward of vehicle), and the shaft 5 is offset inward of the vehicle than the harness holding portion 4 by the dimension L (closer to vehicle body) (harness holding portion 4 is offset outward of vehicle than shaft 5 (closer to sliding door)).

The harness holding portion 24 of the swinging member 23 of the vehicle body 19 side power feeding device 26 (opening 24a which is turning tip end of harness holding portion 24) is oriented outward of the vehicle (thickness direction of sliding door), and the axis of the harness holding portion 24 is located in a direction intersecting with the sliding door 16 at right angles. The harness holding portion 24 is offset forward of the vehicle than the shaft 25 by the dimension L, and projects closer to the sliding door than the shaft 25. The wire harness 2 curves with a large radius while being pulled diagonally rearward from the vehicle body-side swinging member 23 to the sliding door-side swinging member 1' (harness portion 3k close to vehicle body curves with radius smaller than the harness portion 3p close to the sliding door).

When the sliding door 16 is closed forward and is half-opened from the fully opened state as shown in the second drawing from the left in Fig. 9, the corrugated tube 3 of the wire harness 2 is compressed in the axial direction. Thus, by a compression reaction force F on the side of the one end 3a of the corrugated tube 3, a pressing force toward rearward of the vehicle around the shaft 5, i.e., a rotation driving force in the A direction in the counterclockwise direction toward the sliding door 16, acts on the sliding door-side swinging member 1'. The harness holding portion 4 of the swinging member 1' abuts against the back wall 14 of the fixing member 11 (Fig. 7) for example by the rotation driving force in the A direction, and further turning motion is prevented. When the sliding door 16 is half-opened, the sliding door-side swinging member 1' is maintained in the same attitude as the swinging member 1' when the sliding door 16 is fully opened.

When the sliding door 16 is half-opened, a rotation driving force in the D direction is generated around the shaft 25 as a fulcrum by a compression reaction force (pressing force) F' in the axial direction on the side of the other end 3b of the corrugated tube 3, and the vehicle body-side swinging member 23 turns in the clockwise direction, and the harness holding portion 24 (open end 24a which is turning tip end of harness holding portion) is oriented forward of the vehicle. The harness holding portion 24 abuts against the back wall (14) of the vehicle body-side fixing member (similar to reference sign 11 in Fig. 7), and further turning motion is prevented. As described above, when the sliding door 16 is closed, the vehicle body-side swinging member 23 starts turning faster than the sliding door-side swinging member 1'.

The wire harness 2 curves in a semi-circular form with large radius from the vehicle body-side swinging member 23 to the sliding door-side swinging member 1' (semi-circular curved portion is shown by reference sign 3h). That is, the harness holding portion 4 of the sliding door-side swinging member 1' is pressed toward the sliding door 16 by the rotation driving force in the A direction, and the harness holding portion 24 of the vehicle body-side swinging member 23 is pressed toward the vehicle body 19 by the rotation driving force in the D direction. Therefore, both the harness holding portions 4 and 24 are maintained substantially parallel, and the wire harness 2 curves in a semi-circular form with large radius between both the harness holding portions 4 and 24.

When the sliding door 16 is half-opened, an apex (denoted by reference sign 3h) of the curved portion 3h of the wire harness 2 is oriented forward of the vehicle. The shaft 5 of the sliding door-side swinging member 1' and the shaft 25 of the vehicle body-side swinging member 23 are opposed to each other in the thickness direction of the sliding door 16. Both the swinging members 1' and 23 are located substantially symmetrically in the widthwise direction of the vehicle (lateral direction).

For example, a longitudinal distance from the swinging member 1' to the apex of the curved portion 3h of the wire harness 2 is prescribed shorter than a longitudinal distance from the swinging member 41 to a bent portion 43a of a wire harness 43 in the third drawing from the left of the conventional technique in Fig. 11. This is because the wire harness 2 curves in the semi-circular form with large radius. Therefore, it is possible to solve inconvenience that the curved portion 3h of the wire harness 2 projects into the coming in-out opening (not shown) on the side of the vehicle body 19, a passenger is caught in the projection and visual quality is deteriorated.

As the closing operation of the sliding door 16 from the half-opened state thereof is continued, the harness holding portion 24 of the vehicle body-side swinging member 23 projects forward of the vehicle as shown in the third drawing from the left in Fig. 9, and while maintaining this state, the sliding door-side swinging member 1' moves forward of the vehicle integrally with the sliding door 16, and the wire harness 2 is pulled diagonally forward on the outer side of the vehicle around the vehicle body-side swinging member 23 as a fulcrum.

According to this, the corrugated tube 3 gradually loses the compression reaction force F in the axial direction (compression reaction force F is still slightly acting in third drawing from left in Fig. 9), and the sliding door-side swinging member 1' turns in the clockwise direction toward the sliding door 16 as shown by an arrow A' around the shaft 5 by a tensile force in the axial direction of the corrugated tube 3 (tensile force becomes greater than compression reaction force F).

In the third drawing from the left in Fig. 9, the harness holding portion 4 of the swinging member 1' projects toward the side of the vehicle body, and is oriented diagonally rearward on the inner side of the vehicle. The harness holding portion 5 is located closer to the vehicle body 19 than the shaft 5, and is located closer to a front portion of the vehicle than the shaft 5 by a dimension smaller than the offset dimension L (closing direction of sliding door) . As the sliding door 16 moves in the closing direction, the swinging member 1' smoothly turns around the shaft 5 in the clockwise direction from the attitude of the swinging member 1' in the second drawing from the left in Fig. 9 to the attitude of the swinging member 1' in the third drawing from the left in Fig. 9.

When the sliding door 16 is fully closed as shown in the right drawing in Fig. 9 from the state (near open) of the third drawing from the left in Fig. 9, the wire harness 2 is further pulled forward of the vehicle around the vehicle body-side swinging member 23 as a fulcrum, the compression reaction force in the axial direction of the corrugated tube 3 is lost, and the wire harness 2 is substantially straight in the front-back direction of the vehicle between both the swinging members 1' and 23 (wire harness 2 is located slightly diagonally outward from swinging member 23 to swinging member 1').

The harness holding portion 4 is oriented rearward of the vehicle, and is located closer to the vehicle body 19 than the shaft 5 by the offset dimension L (shaft 5 is located closer to sliding door 16 than harness holding portion 4 by offset dimension L). The sliding door 16 approaches the vehicle body 19 along a curved portion of the guide rail (not shown) of the vehicle body 19 in the third drawing from the left.

When the sliding door 16 is opened from its fully closed state, as shown in the second drawing from the right in Fig. 9, the corrugated tube 3 of the wire harness 2 receives a compression force in the axial direction at an initial stage of the opening operation. By the compression reaction force F, the sliding door-side swinging member 1' receives a rotation driving force in the counterclockwise direction as shown by the arrow A around the shaft 5 as a fulcrum, and the harness holding portion 4 turns forward of the vehicle with respect to the shaft 5 located rearward of the vehicle. The vehicle body-side swinging member 23 is maintained in the same state as that when the sliding door 16 is fully closed by a rotation driving force in the D direction by a compression reaction force F' of the corrugated tube 3.

The wire harness 2 curves with large radius from the vehicle body-side swinging member 23 to the sliding door-side swinging member 1' (harness portion 3m close to sliding door curves with radius smaller than harness portion 3n close to vehicle body) . Attitudes of the wire harness 2 and each of the swinging members 1' and 23 are the same as those of the near fully opened state when the sliding door 16 is closed.

As the opening operation of the sliding door 16 is continued, the sliding door-side swinging member 1' keeps turning in the counterclockwise direction in the A direction by a rotation driving force, and when the sliding door 16 is half-opened, the harness holding portion 4 is oriented forward of the vehicle parallel to the sliding door panel 16 at a position close to the sliding door with respect to the shaft 5 rearward of the vehicle and close to the vehicle body as shown in the third drawing from the right in Fig. 9. The vehicle body-side swinging member 23 is maintained in the fully closed state of the sliding door 16 by a rotation driving force in the clockwise direction of the arrow D toward the side of the vehicle body by the compression reaction force F' in the axial direction of the semi-circular corrugated tube 3.

When the sliding door 16 is half-opened, the wire harness 2 curves with large radius (curved portion is shown by reference sign 3h) in semi-circular form from the vehicle body-side swinging member 23 to the sliding door-side swinging member 1'. Attitudes of the wire harness 2 and each of the swinging members 1' and 23 are the same as those of the half-opened state at the time of the closing operation of the sliding door 16.

As the opening operation of the sliding door 16 is continued, the attitude of the sliding door-side swinging member 1' is maintained in the half-opened state of the sliding door and in this state, the wire harness 2 is pulled rearward of the vehicle integrally with the sliding door-side swinging member 1' around the vehicle body-side swinging member 23 as a fulcrum. As shown in the left drawing in Fig. 9, the vehicle body-side swinging member 23 turns in the counterclockwise direction as shown by an arrow D' around the shaft 25 of the rear portion of the vehicle by a tensile force of the wire harness. The harness holding portion 24 of the vehicle body-side swinging member 23 is maintained at a position projecting in the thickness direction of the sliding door by a compression reaction force in the axial direction of the corrugated tube 3 of the wire harness 2 for example. In this state, the sliding door 16 is fully opened.

When the sliding door 16 is fully opened, the harness holding portion 4 of the sliding door-side swinging member 1' is located forward of the vehicle parallel to the sliding door panel 16 close to the sliding door with respect to the shaft 5 rearward of the vehicle and close to the vehicle body. A harness portion 3k of the wire harness 2 close to the vehicle body curves between both the swinging members 1' and 23 (curved portion is shown by reference sign 3k), the harness portion 3p close to the sliding door is pulled and extended in substantially straightly inclined form or in curved form with large radius. The attitudes of the wire harness 2 and the swinging members 1' and 23 are the same as those of the fully opened state before the sliding door 16 is closed.

When the sliding door 16 is closed forward from the fully opened state and when the sliding door 16 is opened rearward from the fully closed state, operations of the sliding door-side and vehicle body-side swinging members 1' and 23 (trajectories) and operation (trajectory) of the wire harness 2 are the same. This is because the harness holding portion 4 and the shaft 5 of the sliding door-side swinging member 1' are offset and as the sliding door 16 is opened and closed, the sliding door-side swinging member 1' is smoothly and reliably turned without being caught.

According to this, the shafts 5 and 25 of the sliding door-side and vehicle body-side swinging members 1' and 23 and the bearing 15 of the fixing member 11 (Fig. 7) smoothly come into sliding contact with each other with small friction resistance, wear of the shafts 5 and 25 and the bearing 15 is suppressed, the wire harness 2 smoothly bends without being caught, bending stress of the wire harness 2 is suppressed to a small value, and bending durability of the wire harness 2 is enhanced. Further, when the sliding door 16 is half-opened, the wire harness 2 curves in the semi-circular form as shown in the second drawing from the left in Fig. 9. According to this, the wire harness 2 is prevented from largely projecting substantially in U shape toward the coming in-out opening of the vehicle body, preventing a foot of a passenger from being caught by the wire harness 2, and preventing the deterioration of the visual quality.

In the conventional technique in Fig. 10, to normally turn the sliding door-side swinging member 41, it is necessary to forcibly turn the swinging member 41 when the sliding door 16 is half-opened using a spring member (torsion coil spring) for example, but since the rotation assisting force is obtained by offsetting the harness holding portion 4 and the shaft 5 of the sliding door-side swinging member 1' as shown in Fig. 9, it is possible to set the spring force of the spring member to a small value or to eliminate the need for the spring member. According to this, the opening/closing operation force of the sliding door 16 becomes small, an operation motor for opening and closing the door can be reduced in size and weight, and electricity to be used can be reduced.

The working effect of the sliding door-side power feeding device 12' in Fig. 9 is exerted also when the swinging member (harness supporting member) 23 of the vehicle body-side power feeding device 26 is replaced by the harness supporting member (harness fixing tool) (not shown) which can swing. In this case, it is preferable that the harness supporting member of the vehicle body-side power feeding device 26 is placed such that the harness supporting member is inclined diagonally forward about 45°.

Although the harness holding portion 24 and the shaft 25 are offset as the vehicle body-side swinging member 23 in the embodiment in Fig. 9, the working effect of the sliding door-side power feeding device 12' in Fig. 9 is exerted even when the harness holding portion 24 and the shaft 25 are placed on the same axis without offsetting the harness holding portion 24 and the shaft 25 as in the embodiment in Fig. 4.

### Industrial Applicability

The power feeding structure for a sliding structure of the present invention can be utilized to smoothly turn the sliding structure-side swinging member, to prevent wear of the shaft or the bearing of the swinging member, to smoothly open and close the sliding structure, and to enhance the durability of the wire harness even if a pressing load in the axial direction of the wire harness acts midway through the opening/closing operation of the sliding structure.

### Reference Sign List

- 1, 1':: swinging member
- 2:: wire harness
- 3:: corrugated tube (external member)
- 3a:: one end
- 3b:: other end
- 4:: harness holding portion
- 5:: shaft
- 11:: fixing member
- 16:: sliding door (sliding structure)
- 17, 23:: swinging member (harness supporting member)
- 19:: vehicle body (fixing structure)
- 24:: harness holding portion
- 25:: shaft

## Claims

1. A power feeding structure, comprising
a fixing structure (19),
a sliding structure (16),
a swinging member (1, 1'), and
a wire harness (2), wherein the wire harness is routed from the swinging member to a harness supporting member at the fixing structure;
wherein the swinging member includes
a harness holding portion (4) arranged in a lateral direction and holds one end of the wire harness,
a turning shaft (5) or a turning bearing arranged in a vertical direction comprising a harness pulling-out hole (10) and being offset from the harness holding portion (4) in a radial direction of the harness holding portion (4), and
a fixing member (11) having upper and lower walls (13) provided with the bearings (15) which turnably engage with the shaft (5) and
a back wall (14) connecting the upper and lower walls (13) and fixed to the sliding structure (16),
wherein, when the sliding structure (16) is fully opened, the harness holding portion (4) is positioned substantially parallel to the back wall (14) of the fixing member (11) and located closer to the sliding structure (16) than the shaft (5) or the bearing (15), and when the sliding structure (16) is fully closed, the harness holding portion (4) is located closer to the fixing structure (19) than the shaft (5) or the bearing (15),
or,
when the sliding structure (16) is fully opened, the harness holding portion (4) is located closer to the fixing structure (19) than the shaft (5) or the bearing (15), and when the sliding structure (16) is fully closed, the harness holding portion (4) is positioned substantially parallel to the back wall (14) of the fixing member (11) and located closer to the sliding structure (16) than the shaft (5) or the bearing (15).

2. A power feeding tool (12) for a sliding structure, comprising
a swinging member (1, 1') having
a harness holding portion (4) arranged in a lateral direction and adapted to hold one end (3a) of a wire harness (2),
a turning shaft (5) or a turning bearing arranged in a vertical direction comprising a harness pulling-out hole (10) and being offset from the harness holding portion (4) in a radial direction of the harness holding portion (4), and
a fixing member (11) comprising upper and lower walls (13) provided with the bearings (15) which turnably engage with the shaft (5) and
a back wall (14) adapted to be fixed to a sliding structure (16) and connecting the upper and lower walls (13),
wherein, when the swinging member is moved to a first position, the shaft or the bearing is located closer to the back wall (14) of the fixing member (11) than the harness holding portion, and,
when the swinging member is moved to a second position, the harness holding portion is located closer to the back wall (14) of the fixing member (11) than the shaft or the bearing and positioned substantially parallel to the back wall (14) of the fixing member (11).

3. The power feeding tool for a sliding structure according to claim 2,
wherein the harness supporting member at the fixing structure side is a swinging member,
wherein the swinging member at the fixing structure side includes
a harness holding portion which is arranged in the lateral direction and which holds the other end of the wire harness, and
a turning shaft or a turning bearing arranged in the vertical direction which is offset from the harness holding portion in the radial direction of the harness holding portion,
wherein, between when the sliding structure is fully opened and when the sliding structure is fully closed, the shaft or the bearing is located in an opening direction of the sliding structure than the harness holding portion.

## Patentansprüche

1. Leistungsversorgungsstruktur, umfassend
eine Befestigungsstruktur (19),
eine Gleitstruktur (16),
ein Schwenkelement (1, 1'), und
einen Kabelbaum (2), wobei der Kabelbaum von dem Schwenkelement zu einem KabelbaumHalteelement an der Befestigungsstruktur geführt wird;
wobei das Schwenkelement umfasst:
einen Kabelbaumhalteabschnitt (4), der in einer seitlichen Richtung angeordnet ist und ein Ende des Kabelbaums hält,
eine Drehwelle (5) oder ein Drehlager, die/das in vertikaler Richtung angeordnet ist und ein Kabelbaumausziehloch (10) aufweist und gegenüber dem Kabelbaumhalteabschnitt (4) in radialer Richtung des Kabelbaumhalteabschnitts (4) versetzt ist, und
ein Befestigungselement (11) mit einer oberen und unteren Wand (13), die mit den Lagern (15) versehen sind, die drehbar mit der Welle (5) in Eingriff stehen, und
eine Rückwand (14), die die obere und untere Wand (13) verbindet und an der Gleitstruktur (16) befestigt ist,
wobei, wenn die Gleitstruktur (16) vollständig geöffnet ist, der Kabelbaumhalteabschnitt (4) im Wesentlichen parallel zur Rückwand (14) des Befestigungselements (11) und näher an der Gleitstruktur (16) als die Welle (5) oder das Lager (15) positioniert ist, und wenn die Gleitstruktur (16) vollständig geschlossen ist, der Kabelbaumhalteabschnitt (4) näher an der Befestigungsstruktur (19) als die Welle (5) oder das Lager (15) positioniert ist, oder,
wenn die Gleitstruktur (16) vollständig geöffnet ist, der Kabelbaumhalteabschnitt (4) näher an der Befestigungsstruktur (19) als die Welle (5) oder das Lager (15) positioniert ist, und wenn die Gleitstruktur (16) vollständig geschlossen ist, der Kabelbaumhalteabschnitt (4) im Wesentlichen parallel zur Rückwand (14) des Befestigungselements (11) und näher an der Gleitstruktur (16) als die Welle (5) oder das Lager (15) positioniert ist.

2. Leistungsversorgungswerkzeug (12) für eine Gleitstruktur, umfassend
ein Schwenkelement (1, 1') mit
einem Kabelbaumhalteabschnitt (4), der in einer seitlichen Richtung angeordnet und zum Halten eines Endes (3a) eines Kabelbaums (2) ausgelegt ist,
einer Drehwelle (5) oder einem Drehlager, die/das in vertikaler Richtung angeordnet ist und ein Kabelbaumausziehloch (10) aufweist und gegenüber dem Kabelbaumhalteabschnitt (4) in radialer Richtung des Kabelbaumhalteabschnitts (4) versetzt ist, und
einem Befestigungselement (11) mit oberen und unteren Wänden (13), die mit den Lagern (15) versehen sind, die drehbar mit der Welle (5) in Eingriff stehen, und
einer Rückwand (14), die an einer Gleitstruktur (16) befestigbar ist und die obere und untere Wand (13) verbindet,
wobei, wenn das Schwenkelement in eine erste Position bewegt wird, die Welle oder das Lager näher an der Rückwand (14) des Befestigungselements (11) als der Kabelbaumhalteabschnitt positioniert ist, und,
wenn das Schwingelement in eine zweite Position bewegt wird, der Kabelbaumhalteabschnitt näher an der Rückwand (14) des Befestigungselements (11) als die Welle oder das Lager angeordnet und im Wesentlichen parallel zur Rückwand (14) des Befestigungselements (11) positioniert ist.

3. Leistungsversorgungswerkzeug für eine Gleitstruktur nach Anspruch 2,
wobei das Kabelbaumhalteelement auf der Seite der Befestigungsstruktur ein Schwenkelement ist,
wobei das Schwenkelement auf der Seite der Befestigungsstruktur umfasst:
einen Kabelbaumhalteabschnitt, der in einer seitlichen Richtung angeordnet ist und das andere Ende des Kabelbaums hält, und
eine Drehwelle oder ein Drehlager, die/das in vertikaler Richtung angeordnet und von dem Kabelbaumhalteabschnitt in radialer Richtung des Kabelbaumhalteabschnitts versetzt ist,
wobei zwischen dem Zeitpunkt, zu dem die Gleitstruktur vollständig geöffnet ist und dem Zeitpunkt, zu dem die Gleitstruktur vollständig geschlossen ist, die Welle oder das Lager vielmehr in einer Öffnungsrichtung der Gleitstruktur als am Kabelbaumhalteabschnitt angeordnet ist.

## Revendications

1. Structure d'alimentation en énergie, comprenant
une structure de fixation (19),
une structure coulissante (16),
un élément oscillant (1, 1'), et
un faisceau de câbles (2), dans lequel le faisceau de câbles est acheminé depuis l'élément oscillant vers un élément de support de faisceau au niveau de la structure de fixation ;
dans lequel l'élément oscillant comprend
une partie de maintien de faisceau (4) agencée dans une direction latérale et qui maintient une extrémité du faisceau de câbles,
un arbre tournant (5) ou un palier tournant agencé dans une direction verticale comprenant un trou d'extraction de faisceau (10) et qui est décalé par rapport à la partie de maintien de faisceau (4) dans une direction radiale de la partie de maintien de faisceau (4), et
un élément de fixation (11) ayant des parois supérieure et inférieure (13) munies des paliers (15) qui viennent en prise de manière rotative avec l'arbre (5) et
une paroi arrière (14) reliant les parois supérieure et inférieure (13) et fixée à la structure coulissante (16),
dans lequel, lorsque la structure coulissante (16) est complètement ouverte, la partie de maintien de faisceau (4) est positionnée de manière sensiblement parallèle à la paroi arrière (14) de l'élément de fixation (11) et est située plus près de la structure coulissante (16) que l'arbre (5) ou le palier (15), et lorsque la structure coulissante (16) est complètement fermée, la partie de maintien de faisceau (4) est située plus près de la structure de fixation (19) que l'arbre (5) ou le roulement (15),
ou,
lorsque la structure coulissante (16) est complètement ouverte, la partie de maintien de faisceau (4) est située plus près de la structure de fixation (19) que l'arbre (5) ou le palier (15), et lorsque la structure coulissante (16) est complètement fermée, la partie de maintien de faisceau (4) est positionnée de manière sensiblement parallèle à la paroi arrière (14) de l'élément de fixation (11) et située plus près de la structure coulissante (16) que l'arbre (5) ou le palier (15).

2. Outil d'alimentation en énergie (12) pour une structure coulissante, comprenant
un élément oscillant (1, 1') ayant
une partie de maintien de faisceau (4) agencée dans une direction latérale et adaptée pour maintenir une extrémité (3a) d'un faisceau de câbles (2),
un arbre tournant (5) ou un palier tournant disposé dans une direction verticale comprenant un trou d'extraction de faisceau (10) et décalé par rapport à la partie de maintien de faisceau (4) dans une direction radiale de la partie de maintien de faisceau (4), et
un élément de fixation (11) comprenant des parois supérieure et inférieure (13) munies des paliers (15) qui viennent en prise de manière rotative avec l'arbre (5) et
une paroi arrière (14) adaptée pour être fixée à une structure coulissante (16) et reliant les parois supérieure et inférieure (13),
dans lequel, lorsque l'élément oscillant est déplacé dans une première position, l'arbre ou le roulement est situé plus près de la paroi arrière (14) de l'élément de fixation (11) que la partie de maintien de faisceau, et
lorsque l'élément oscillant est déplacé dans une seconde position, la partie de maintien de faisceau est située plus près de la paroi arrière (14) de l'élément de fixation (11) que l'arbre ou le palier et est positionnée de manière sensiblement parallèle à la paroi arrière (14) de l'élément de fixation (11).

3. Outil d'alimentation en énergie pour une structure coulissante selon la revendication 2,
dans lequel l'élément de support de faisceau du côté structure de fixation est un élément oscillant,
dans lequel l'élément oscillant du côté structure de fixation comprend
une partie de maintien de faisceau qui est agencée dans la direction latérale et qui maintient l'autre extrémité du faisceau de câbles, et
un arbre tournant ou un roulement tournant agencé dans la direction verticale qui est décalé de la partie de maintien de faisceau dans la direction radiale de la partie de maintien de faisceau,
dans lequel, entre le moment où la structure coulissante est complètement ouverte et le moment où la structure coulissante est complètement fermée, l'arbre ou le palier est situé dans une direction d'ouverture de la structure coulissante par rapport à la partie de maintien de faisceau.
